**Europäisches Patentamt**

**European Patent Office**

**Office européen des brevets**

(19)

(11) Veröffentlichungsnummer: **0 085 121**
**B1**

(12) # EUROPÄISCHE PATENTSCHRIFT

(45) Veröffentlichungstag der Patentschrift:
**12.06.85**

(51) Int. Cl.⁴: **C 01 B 31/00**

(21) Anmeldenummer: **82100621.0**

(22) Anmeldetag: **29.01.82**

(54) **Verfahren zum Herstellen geblähter Graphitpartikel.**

(43) Veröffentlichungstag der Anmeldung:
**10.08.83 Patentblatt 83/32**

(45) Bekanntmachung des Hinweises auf die Patenterteilung:
**12.06.85 Patentblatt 85/24**

(84) Benannte Vertragsstaaten:
**DE FR GB IT SE**

(56) Entgegenhaltungen:
**DE - A - 1 667 450**
**DE - A - 2 543 788**
**DE - C - 66 804**
**DE - C - 2 608 866**
**US - A - 1 191 383**
**US - A - 3 414 381**

(73) Patentinhaber: **SIGRI ELEKTROGRAPHIT GMBH,**
**Werner von Siemens-Strasse 18, D-8901 Meitingen (DE)**

(72) Erfinder: **Jung, Detlef, Dr.rer.nat., Danziger Ring 17,**
**D-8901 Meitingen (DE)**
Erfinder: **Lorenz, Alfred, Mühlstrasse 5,**
**D-8901 Langweid-Stettenhofen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Herstellen geblähter Graphitpartikel, bei welchem durch Einwirkung gasförmiger Oxidationsmittel auf Graphitpartikel mit einem hohen Ordnungsgrad Graphiteinlagerungsverbindungen gebildet und die Verbindungen durch Erhitzen zersetzt werden.

Durch die DE-PS Nr. 66804 ist es bekannt, Naturgraphitpulver mit konzentrierter Salpetersäure zu befeuchten und die befeuchteten Partikel in starkem Feuer zu glühen. Die Graphitpartikel blähen sich dabei ausserordentlich auf und es entstehen harmonikaartig auseinandergetriebene Gebilde, die sich leicht in allerlei Formen pressen lassen. Geblähter Graphit wird nach der US-PS Nr. 1191383 dadurch hergestellt, dass Graphitpartikel mit einem die Partikel durchgehend benetzenden, oxidierenden Agenz erwärmt, nach einer ausreichenden Verweilzeit zur Entfernung von überschüssigem Reaktionsmittel gewaschen und dann mit hoher Geschwindigkeit auf eine Temperatur im Bereich von 350 bis 600° C erhitzt werden. Bei Verwendung eines Gemisches von konzentrierter Schwefelsäure und konzentrierter Salpetersäure als Oxidationsmittel betragen die Reaktionstemperatur etwa 60 bis 130° C und die Reaktionszeit etwa 0,15 bis 4 h. Andere für diesen Zweck geeignete Oxidationsmittel sind Chromsäure, Phosphorsäure, Kaliumchlorat usw., besonders im Gemisch mit Schwefelsäure. Besonders grosse Effekte werden mit Graphitsorten erzielt, die einen hohen Ordnungsgrad und verhältnismässig wenig Stapelfehler aufweisen. Der Blähoder Expansionsfaktor beträgt unter diesen Bedingungen mehr als 200, worunter die Verlängerung der Graphitpartikel in Richtung der kristallographischen c-Achse um diesen Betrag zu verstehen ist.

Ursachen der gewaltigen Längenänderung sind im wesentlichen die Schichtstruktur des Graphits, die Bildung von Einlagerungsverbindungen in Gegenwart oxidierender Agenzien und die schlagartige mit der Bildung gasförmiger Stoffe verbundene Zersetzung der Einlagerungsverbindungen durch schnelles Erhitzen. Dabei blättern die Partikel senkrecht zu den Schicht- oder Lamellenebenen der Graphitkristalle wie die Blätter eines Buchs auseinander, ohne dass der Zusammenhalt innerhalb der Partikel merklich verloren geht. Die als expandierte oder geblähte Graphitpartikel bezeichneten Gebilde weisen eine wurmartige Strukturierung auf und verzahnen sich beim Komprimieren eines Partikelhaufwerks derart miteinander, dass ohne Zusatz besonderer Binder mechanisch stabile flexible Gebilde, wie Graphitfolie biegsame Dichtungsringe u. ä. hergestellt werden können. Graphitfolie ist beispielsweise ein vorzüglicher Werkstoff für korrosions- und temperaturbeständige Packungen, Strahlungsschilde und flexible Heizleiter.

Von den oben genannten oxidierenden Agenzien werden im grösseren Umfang nur Salpetersäure/Schwefelsäure-Gemische verwendet, gegebenenfalls auch in Form verdünnter Lösung als Elektrolyt in Vorrichtungen zur anodischen Oxidation von Graphit (DE-PS Nr. 1667450). Metallionenhaltige Agenzien sind wegen der unvermeidbaren, die Verwendbarkeit des Graphits beschränkende Rückstände kaum brauchbar. Ein gewichtiger Nachteil von rauchende Salpetersäure und konzentrierte Schwefelsäure enthaltenden Gemischen ist die Bildung von Stickstoffoxiden, besonders von Stickstoffdioxid, die zum Teil direkt in die Atmosphäre entweichen und zu einem anderen Teil in der Schwefelsäure gelöst und später als nitrose Gase emittiert werden. Zudem wird das Säuregemisch in diesem Prozess stark verdünnt und die Aufkonzentration ist vor allem wegen des bei der Oxidation des Graphits gebildeten, in der Lösung suspendierten kolloidalen Kohlenstoffs nur mit grossen Schwierigkeiten möglich. Die Nachteile werden nach der Lehre der DE-PS Nr. 2608866 zum Teil durch ein Verfahren behoben, bei welchem ein Gemisch aus Schwefelsäure und Wasserstoffperoxid als oxidierendes Agenz verwendet wird. Das Verfahren schliesst insbesondere die Bildung nitroser Gase aus. Nicht befriedigend ist der grosse Überschuss des Oxidationsmittels, der etwa 2:1 beträgt, und die mit dem Waschwasser verlorengehende Schwefelsäure, für deren Neutralisierung aufwendige Massnahmen nötig sind. Es ist auch bekannt, Graphitpartikel gemeinsam mit gasförmigen Lewis-Säuren zu erhitzen, wie $SO_3$, $BF_3$, $PF_5$, $TaF_5$, $AsF_5$, $PtF_4$, $SbF_4$, $SbF_5$, $SiF_4$, $NbF_5$, $UF_6$, $TiF_4$ und $VF_5$. Unter diesen Bedingungen ist es nötig, zur Erhöhung der Reaktionsgeschwindigleit dem Reaktionsgemisch elementares Fluor zuzusetzen (DE-OS Nr. 2543788). Die Aggressivität des Fluors und der bei der Zersetzung der Einlagerungsverbindung gebildeten gasförmigen Produkte ist nur mit beträchtlichem technischen Aufwand zu beherrschen, ohne dass man schwerwiegende Korrosions- und Umweltschäden vollständig ausschalten kann. Nach einem anderen Verfahren ist es bekannt, geblähte oder expandierte Graphitpartikel mit einem gasförmigen Stoff, wie z. B. $Br_2$, $SO_3$, $N_2O_4$, $CrO_2Cl_2$, $FeCl_3$ zu behandeln, die Partikel zu einem Körper zusammenzupressen und diese durch Eintauchen in eine Lösung von Wasserstoffperoxid aufzublähen (US-PS Nr. 3414381). Diese Erfindung betrifft nicht die Re-Expansion von verdichtetem geblähten oder expandierten Graphit, sondern die primäre Herstellung geblähter Graphitpartikel.

Der Erfindung liegt daher die Aufgabe zugrunde, in einem Verfahren der eingangs genannten Art zur Herstellung von geblähten Graphitpartikeln geeignete Graphiteinlagerungsverbindungen ohne einen besonderen Waschprozess mit einer kleinen Menge oxidierender Agenzien zu erzeugen. Nach anderen Aufgaben soll die Reaktionszeit für die Bildung der Einlagerungsverbindung verkürzt und die Reaktion selbst kontinuierlich gestaltet werden.

Die Aufgabe wird mit einem Verfahren der eingangs genannten Art dadurch gelöst, dass die Graphitpartikel durch einen gasförmige Oxidationsmittel aus der Gruppe $SO_3$, $NO_2$, $N_2O_4$ und $N_2O_5$

enthaltenden Reaktor bewegt und nach Bildung der Graphiteinlagerungsverbindung kontinuierlich oder taktweise aus dem Reaktor abgezogen werden.

Es wurde überraschend gefunden, dass gasförmige Oxidationsmittel im Kontakt mit Graphitpartikeln bereits bei Normaltemperatur oder einer leicht erhöhten Temperatur innerhalb einer Zeitspanne von wenigen Minuten Graphiteinlagerungsverbindungen bilden, die beim Erhitzen unter Bildung harmonikaartig geblähter Graphitpartikel zerfallen. Die geblähten Partikel weisen eine vorzügliche Plastizität auf und lassen sich leicht ohne Zusatz eines Binders in mechanisch stabile, flexible Gebilde formen, z. B. durch Walzen oder Gesenkpressen. Die Bildung von Graphiteinlagerungsverbindungen durch Einwirkung eines gasförmigen Reaktionsmittels, nämlich Halogene und Halogenverbindungen, wie Brom, und die Zersetzung der Einlagerungsverbindung, z. B. $C_8Br$, unter Bildung geblähter Graphitpartikel ist zwar bekannt, doch sind diese Verfahren wegen der langen Reaktionszeit und der grossen Korrosivität der Reaktionsprodukte für technische Zwecke kaum brauchbar. Bei dem erfindungsgemässen Verfahren ist die zur Bildung von Einlagerungsverbindungen führende Reaktion nach etwa 3 bis 5 min beendet und die Reaktionsprodukte sind gegen technisch erprobte Werkstoffe nur geringfügig korrosiv.

Gasförmige Oxidationsmittel nach der Erfindung sind insbesondere Oxide aus der Gruppe $SO_3$, $NO_2$, $N_2O_4$ und $N_2O_5$ oder Gemische dieser Oxide. Bei Raumtemperatur flüssige Oxide werden zweckmässig durch vorsichtiges Erwärmen verdampft und der Dampf über eine lockere Schüttung von Graphitpartikeln geleitet. Für das Verfahren eignen sich alle Graphitsorten, die vergleichsweise wenig Stapelfehler und andere Fehlstellen aufweisen. Der Abstand der Kohlenstoffschichtebenen beträgt bei diesen Sorten etwa 0,335 nm und die mittlere Kristallitgrösse etwa 100 nm. Besonders vorteilhaft sind makrokristalliner Naturgraphit, Pyrographit und Kischgraphit, mit einer Partikelgrösse von etwa 0,1 bis 3,0 mm. Die Partikel werden zweckmässig in Form einer lockeren Schüttung oder in einem Fliessbett mit dem Oxidationsmittel in Kontakt gebracht, wobei die Reaktionstemperatur vorzugsweise 40 bis 200°C und die Kontaktzeit etwa 3 bis 5 min betragen. Für die einzelnen Graphitsorten und apparativen Ausführungen können die jeweils günstigsten Bedingungen durch einfache Vorversuche bestimmt werden. Beispielsweise nimmt die Umsatzgeschwindigkeit des vergleichsweise reaktionsträgen Schwefeltrioxids mit Zusätzen geringer Mengen von Stickstoffoxiden beträchtlich zu. Die zur Bildung einer Einlagerungsverbindung führende Reaktion zwischen den Graphitpartikeln und den Oxidationsmitteln erfolgt zweckmässig in einem geschlossenen Reaktor, dem das gasförmige Oxidationsmittel von aussen zugeführt oder durch Verdampfen einer kondensierten Form des Oxidationsmittels innerhalb des Reaktors erzeugt wird. Aufgrund der vergleichsweise sehr kleinen Reaktionszeiten ist es besonders vorteilhaft, die Graphitpartikel während der Reaktion durch den Reaktor zu bewegen, der in an sich bekannter Weise mit Schleusen zum Einspeisen der Graphitpartikel und zum Abzug des Reaktionsprodukts versehen ist. Als Transportmittel eignen sich besonders Plattenbänder, Vibrationsrinnen u. dgl. Die kontinuierlich aus dem Reaktor ausgetragene Einlagerungsverbindung wird bei dieser Ausbildung des Verfahrens direkt ohne Zwischenkühlung in einen Ofen eingespeist und auf die Zersetzungstemperatur der Verbindung erhitzt.

Die aus dem Reaktor ausgetragenen Einlagerungsverbindungen sind trocken und enthalten kein überschüssiges Oxidationsmittel, so dass das nach den bekannten Verfahren nötige Waschen und anschliessende Trocknen der Einlagerungsverbindung entfällt. Es ist vielmehr vorteilhaft, die Graphiteinlagerungsverbindung ohne Zwischenkühlung durch schnelles Erhitzen auf eine Temperatur im Bereich zwischen 150 und 800°C zu zersetzen. Das in den Graphit eingelagerte Oxidationsmittel wird dabei freigesetzt und die Partikel blähen sich harmonikaartig aus. Zur Reinigung des Abgases eignen sich bekannte Verfahren, beispielsweise können die freigesetzten Oxide aus dem Gasstrom ausgewaschen oder nach Kühlung in einem Elektrofilter als konzentrierte Lösung gewonnen oder durch ein Adsorptionsmittel, wie Aktivkohle abgeschieden werden und durch Desorption zurückgewonnen werden.

Die Erfindung wird im Folgenden beispielhaft erläutert.

*Beispiel 1:*

In ein Reaktionsgefäss wurde in einem Keramiktrog zu einer etwa 5 bis 10 mm dicken Schicht ausgebreitetes Naturgraphitpulver mit einer mittleren Partikelgrösse von etwa 0,8 mm eingesetzt und durch Oleum, das mit dem Pulver nicht in direktem Kontakt stand, eine $SO_3$-haltige Atmosphäre erzeugt. Der metallische Glanz der Graphitpartikel verschwindet nach kurzer Zeit und es entsteht ein blau-schwarz gefärbtes Produkt. Bei einer Reaktortemperatur von 45°C ist die Reaktion nach 3 bis 5 min beendet. Es hat sich eine Einlagerungsverbindung gebildet; Graphitinterferenzlinien sind röntgenographisch nicht nachweisbar.

Das erzeugte Produkt ist trocken und rieselfähig und behält diese Eigenschaften bei trockener Lagerung. Der thermogravimetrisch gemessene Gewichtsverlust beim Erhitzen auf 620°C beträgt etwa 4% und der durch schnelles Erhitzen auf ca. 650°C erreichte Expansionsfaktor 200 bis 400.

*Beispiel 2:*

Naturgraphitpulver mit einer mittleren Korngrösse von etwa 1 mm wurde über eine Zellenradschleuse in einen Reaktor gespeist, auf einer Vibrationsrinne ausgebreitet und zu einer zweiten, den Reaktorausgang bildenden Zellenradschleuse gefördert. In den Reaktionsraum wurde ein trockenes, durch Trocknen von Salpetersäure mit einem Phosphorpentoxidgranulat erzeugtes $NO_2$-, $N_2O_4$- und $N_2O_5$-haltiges Gasgemisch ge-

leitet. Das bei einer Temperatur von 50° C nach einer mittleren Verweilzeit von 5 min aus dem Reaktor ausgetragene Produkt ist eine Graphiteinlagerungsverbindung. Das Produkt ist trocken und auch in Luft unbegrenzt beständig. Der durch schnelles Erhitzen auf 160° C erzielte Expansionsfaktor beträgt 200.

*Beispiel 3:*

Naturgraphitpulver mit einer Korngrösse von 0,1 mm wurde in einer $SO_3$-haltigen Atmosphäre gemäss Beispiel 1 und anschliessend in einer stickoxidhaltigen Atmosphäre gemäss Beispiel 2 behandelt. Die erzeugte Einlagerungsverbindung ist ausserordentlich reaktiv und expandiert beim Erhitzen auf etwa 350° C um mehr als das 400fache.

*Beispiel 4:*

In dem Reaktor nach Beispiel 1 wurde ein Gemisch aus konzentrierter Salpetersäure und Schwefelsäure auf etwa 170° C erhitzt und das Graphitpulver mit den dabei entstehenden nitrosen Gasen beaufschlagt. Aus dem nach einer Reaktionszeit von 10 min abgezogenen Produkt wurde durch Erhitzen auf 800° C geblähte Graphitpartikel mit einem Expansionsfaktor von etwa 200 erzeugt.

**Patentansprüche**

1. Verfahren zum Herstellen gebläter Graphitpartikel, bei welchem durch Einwirkung gasförmiger Oxidationsmittel auf Graphiteinlagerungsverbindungen gebildet und die Verbindungen durch Erhitzen zersetzt werden, dadurch gekennzeichnet, dass die Graphitpartikel durch einen gasförmige Oxidationsmittel aus der Gruppe $SO_3$, $NO_2$, $N_2O_4$ und $N_2O_5$ enthaltenden Reaktor bewegt und nach Bildung der Graphiteinlagerungsverbindung kontinuierlich oder taktweise aus dem Reaktor abgezogen werden.

2. Verfahren nach Anspruch 1, dadurch gekennzeichnet, dass die aus dem Reaktor ausgetragene Graphiteinlagerungsverbindung ohne Zwischenkühlung durch schnelles Erhitzen auf eine Temperatur von 150 bis 800° C zersetzt wird.

**Claims**

1. Process for the preparation of expanded graphite particles in which graphite intercalation compounds are formed by the action of a gaseous oxidising agent on graphite particles which have a high degree of ordering and said compounds are decomposed by heating, characterised in that the graphite particles are moved through a reactor containing oxidising agents from the group $SO_3$, $NO_2$, $N_2O_4$, $N_2O_5$ and the graphite intercalation compound formed is removed from the reactor continuously or stepwise.

2. The process of Claim 1, characterised in that the graphite intercalation compound withdrawn from the reactor is decomposed by rapid heating up to 150 to 800° C without an intermediate cooling step.

**Revendications**

1. Procédé de fabrication de particules de graphite expansées, dans lequel il est formé, sous l'effet d'un agent d'oxydation gazeux sur les particules de graphite, des composés d'insertion du graphite ayant un haut degré de structuration et dans lequel ceux-ci sont décomposés par chauffage, caractérisé en ce que les particules de graphite passent dans un réacteur contenant un agent d'oxydation gazeux du groupe $SO_3$, $NO_2 N_2O_4$ et $N_2O_5$ et en ce qu'elles sont retirées du réacteur, continuellement ou à intervalles réguliers.

2. Procédé suivant la revendication 1, caractérisé en ce que le composé d'insertion du graphite extrait du réacteur est décomposé sans refroidissement intermédiaire par chauffage rapide à une température de 150 à 800° C.